# EUROPÄISCHE PATENTSCHRIFT

(11) **EP 1 524 211 B1**
(45) Veröffentlichungstag und Bekanntmachung des Hinweises auf die Patenterteilung: **18.11.2009**
(21) Anmeldenummer: 04104401.7
(22) Anmeldetag: 13.09.2004
(51) Int. Cl.: B65G 17/02

(54) **Förderband für eine Förderanlage**
Conveyor belt for a conveying apparatus
Bande de transport pour un convoyeur

(30) Priorität: 18.10.2003 DE 10348515
(43) Veröffentlichungstag der Anmeldung: 20.04.2005
(73) Patentinhaber: ContiTech Transportbandsysteme GmbH, 30165 Hannover (DE)
(72) Erfinder: Deiters, Rolf-Hartmut, 37589 Kalefeld (DE)
(74) Vertreter: Finger, Karsten

(56) Entgegenhaltungen:
- EP-A2- 0 745 545
- DE-U- 1 950 178
- US-A- 3 279 588
- US-A- 4 109 784
- US-A- 4 674 627

## Beschreibung

Die Erfindung betrifft ein Förderband für eine Langstreckenförderanlage gemäß dem Oberbegriff des Patentanspruchs 1.

Ein solches gattungsbildendes Förderband ist aus der EP 0 745 545 A2 bekannt, in der eine Förderanlage zum Transport von Gütern über lange Strecken mittels eines Förderbandes beschrieben wird. Dieses in sich geschlossene Förderband weist einen sich in Förderrichtung erstreckenden Fördergurt sowie voneinander beabstandete Balken auf, die quer zur Förderrichtung auf dem Fördergurt befestigt sind. An deren beiden freien Enden sind Rollen drehbar gelagert angeordnet, die auf längs geführten Tragseilen abrollen. Diese Tragseile sind in an sich bekannter Weise parallel zur Längserstreckung des Förderbandes ausgerichtet und werden von entsprechenden Tragwerken geführt und gehalten.

Neben den quer zur Förderrichtung des Förderbandes auf demselben angeordneten Balken verfügt dieses über eine rechts- und eine linksseitige Seitenfläche, die im wesentlichen senkrecht auf der Tragseite des Förderbandes befestigt sind. Dadurch sind auf dem Förderband in der Praxis bis zu 6 Meter lange kastenförmige Transportbereiche ausgebildet, in denen das Fördergut rutschsicher aufnehmbar ist.

Damit das Förderband trotz der vergleichsweise hohen Seitenwände an den beiden Endpunkten der Transportstrecke schadlos um dort befindliche Umlenktrommeln geführt werden kann, sind diese Seitenwände gemäß dem Stand der Technik als sogenannte Wellkanten ausgebildet. Dieser Begriff verdeutlicht, dass die Seitenwände nicht langgestreckt und plan, sondern in gewellter Form beziehungsweise in Schlangenlinienform auf dem Förderband befestigt sind. Dadurch ist für die mit der Umlenkung des Förderbandes einhergehende Seitenwandstreckung genug Seitenwandmaterial vorhanden, um ein Reißen derselben zu verhindern.

Dieser Aufbau des Förderbandes erlaubt zwar einerseits sehr vorteilhaft einen effektiven Transport von Materialien über vergleichsweise große Strecken, andererseits ist dieser aber auch mit einer Reihe von Nachteilen verbunden. So sind die Herstellkosten des komplettierten Förderbandes nicht gering, da der Basisgurt und die Wellkanten getrennt voneinander hergestellt werden. Zudem ist der Materialaufwand für die Wellkanten wegen deren Wellengeometrie vergleichsweise hoch.

Aus der US-A-3 279 588 ist eine Förderanlage bekannt, die ein aus einzelnen Segmenten zusammengesetztes Plattenförderband aufweist. Ein Gurttuch dient als Unterlage für das Fördergut. Die Zuglast bei diesem Plattenförderer übernehmen Verbindungselemente. Aus den Verbindungselementen und Verbindungsbolzen ist an den Seiten des Förderers jeweils eine endlose Kette mit Tragrollen gebildet.

Zwischen den Ketten sind aus Quertraversen, Verstrebungen und abgewinkelten Seitenteilen bestehende biegesteife kassettenartige Platten angeordnet, die mittels Trägerelementen und Bolzen an den Verbindungselementen befestigt sind. Auf diesen Platten sind ebenfalls biegesteife seitliche Begrenzungsstücke aufgeschraubt, die sich in Längsrichtung auf einer vorbestimmten Strecke überlappen und das Herunterfallen von Fördergut verhindern sollen. Eine Verbindung zwischen den Seitenteilen besteht nur indirekt über die Verbindung der einzelnen Platten.

Ein derartiger Plattenbandförderer weist also unflexible Platten auf, die über zwei Ketten zu einer segmentierten Förderstrecke zusammengesetzt sind. Die Seitenteile sind nicht miteinander verbunden, sondern auf den einzelnen Platten des Förderers festgeschraubt. Eine flexible Biegung der Platten oder der Seitenteile um Umlenkrollen an den Enden der Förderstrecke ist nicht möglich. Das Gurttuch übernimmt keine Zuglasten, sondern dient als Unterlage für das Fördergut. Die Traglast übernehmen die Platten des Plattenbandförderers, die Zuglasten werden von den Ketten übernommen.

Der Erfindung liegt die Aufgabe zugrunde, ein gattungsgemäßes Förderband für Langstreckenförderanlagen vorzustellen, welches unter Beibehaltung der genannten Vorteile kostengünstiger als bisher herstellbar ist.

Die Lösung dieser Aufgabe ergibt sich aus den Merkmalen des Hauptanspruchs, während vorteilhafte Weiterbildungen und Ausgestaltungen der Erfindung den Unteransprüchen entnehmbar sind.

Demnach geht es bei der Erfindung um ein Förderband für eine Langstreckenfördervorrichtung, mit einem langgestreckten Basisgurt, an dem in Längsrichtung hintereinander angeordnet Querbalken befestigt sind. Diese Querbalken tragen an ihren freien Enden drehbar gelagerte Rollen. Zudem sind an dem Basisgurt zwei rechts- und linksseitig im Bereich der seitlichen Begrenzung des Basisgurtes angeordnete Seitenwände vorhanden. Die gestellte Aufgabe wird im Zusammenhang mit genannten Merkmalen nun dadurch gelöst, dass die Seitenwände unverwunden sind.

Durch diese konstruktive Maßnahme kann der Materialeinsatz beim Aufbau der Seitenwände gegenüber den bekannten Wellkanten deutlich reduziert werden. Sofern die Umlenktrommeln an den beiden Endpunkten der Förderstrecke im Verhältnis zur Höhe der Seitenwände einen ausreichend großen Durchmesser aufweisen, kann das Förderband der Langstreckenförderanlage schadlos umgelenkt werden. Insgesamt gesehen ergibt sich insbesondere bei sehr langen Förderstrecken und bei großen Umlenktrommeln ein deutlicher Vorteil bei den Herstellkosten der Gesamtanlage.

Wenn das Verhältnis des Durchmessers der Umlenktrommeln zu der Höhe der Seitenwände nicht so günstig ausfällt, d.h. die Umlenktrommeln weisen einen kleineren Durchmesser auf, besteht nach einem anderen Aspekt der Erfmdung die Möglichkeit, in den Seitenwänden Schlitze auszubilden, die senkrecht zur Förderrichtung und zur Quererstreckung des Basisgurtes ausgerichtet sind.

Um zu vermeiden, dass bei kleinerem Durchmesser der Umlenktrommeln die Gefahr des Einreißens der Seitenwände entsteht, kann zusätzlich vorgesehen sein, dass das geschlossene Ende der Schlitze kreisförmig ausgebildet ist.

Hinsichtlich der Länge der Schlitze wird es als vorteilhaft angesehen, wenn diese einschließlich des kreisförmigen Endes eine Länge von 55% bis 85%, insbesondere von 75% der Seitenwandhöhe aufweisen.

Bezüglich der Querschnittsgeometrie der Seitenwände wird zudem vorgeschlagen, dass diese im wesentlichen rechteckig ist, und dass die Seitenwände eine vergleichsweise plane Oberfläche aufweisen.

Damit die Seitenwände auch hohe Seitenkräfte durch das Transportgut aufnehmen können, ist nach einer anderen Ausgestaltung der Erfindung vorgesehen, dass in den vorzugsweise aus einem gummielastischen Material hergestellten Seitenwänden Verstärkungsfasern oder textile Gewebelagen eingebettet sind.

Die Verbindung der Seitenwände mit dem Basisgurt kann auf unterschiedliche Weise erfolgen, wobei die tatsächliche Nutzungsform von einem Optimierungsprozess hinsichtlich der Herstellkosten des Fördergurtes, den mechanischen Eigenschaften desselben sowie der Transportkosten zum Aufbauort der Förderanlage abhängt. So kann nach einer ersten Variante vorgesehen sein, dass die Seitenwände mit dem Basisgurt über spezielle Verbindungsmittel verbunden sind. So können die Seitenwände mit dem Basisgurt beispielsweise verklebt sein.

Bei einer zweiten Variante kann es vorteilhaft sein, wenn die Verbindungsmittel als Befestigungsschrauben ausgebildet sind. Bei der Ausrichtung der Verbindungsmittel wird der Fachmann geeignete Mittel zwischen dem Basisgurt und den Seitenwänden einsetzen, die der jeweiligen Ausrichtung der Befestigungsmittel gerecht werden.

So kann beispielsweise vorgesehen sein, dass die Seitenwände an ihrem basisgurtseitigen Ende jeweils mit wenigstens einem sich in Förderrichtung erstreckenden Fußteil verbunden sind, welches seinerseits auf der Tragseite des Basisgurtes befestigt ist.

In diesem Zusammenhang ist es vorteilhaft, wenn die Seitenwände parallel zu ihrer Längserstreckung rechts- und linksseitig mit je einem Fußteil verbunden sind. Dazu können die Fußteile mit dem Basisgurt verklebt oder mittels Befestigungsschrauben verbunden sein.

In einer dritten Variante kann vorgesehen sein, dass die Fußteile als extrudierte Bauteile ausgebildet sind. Der Vorteil liegt darin, dass die Fußteile in beliebiger Länge hergestellt und später auf die erforderlichen Längen abgeteilt werden können.

Zum Aufbau des mit den eingangs genannten Querbalken komplettierten Fördergurtes wird außerdem vorgeschlagen, dass die Seitenwände quer zu deren Längserstreckung ausgerichtete Durchführöffnungen zur Aufnahme der Querbalken aufweisen. Diese Durchführöffnungen und/oder die Öffnungen zur Aufnahme von Befestigungsschrauben sind dabei vorzugsweise aus den Seitenwänden herausgestanzt oder herausgebohrt.

Zum besseren Verständnis der Erfindung ist der Beschreibung eine Zeichnung beigefügt, in der eine Ausführungsform des erfindungsgemäßen Förderbandes abgebildet ist. In dieser zeigen im einzelnen:
- Fig. 1: einen Förderbandabschnitt zwischen zwei Querbalken,
- Fig. 2: einen Querschnitt durch eine Seitenwand und durch Fußteile des Förderbandes, sowie
- Fig. 3: eine teilweise Seitenansicht im Schnitt durch eine Umlenktrommel einer Langstreckenförderanlage mit einem darauf umgelenkten Förderband.

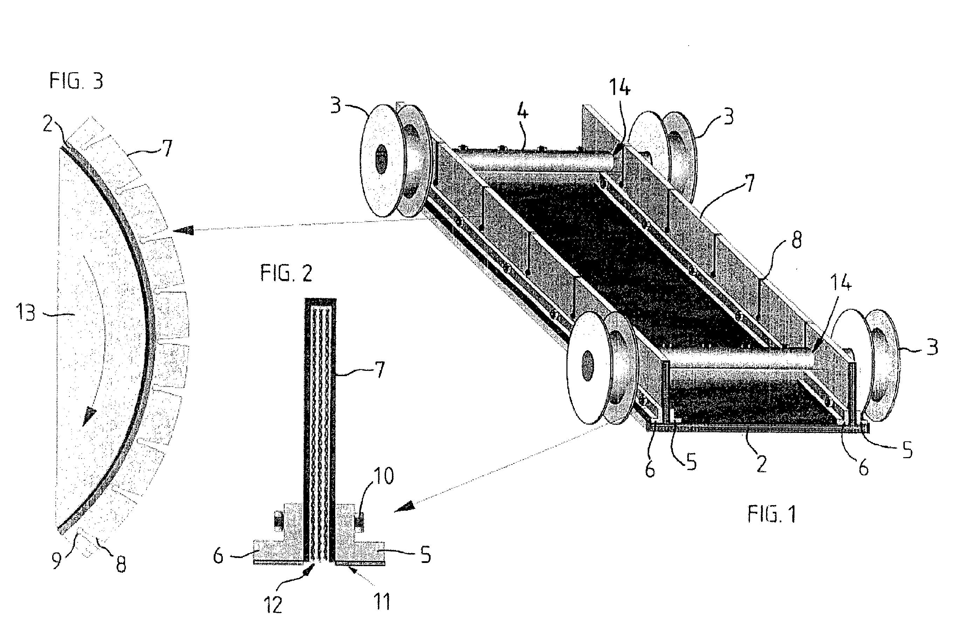

Demnach kann Figur 1 ein Förderbandabschnitt 1 einer Langstreckenförderanlage entnommen werden, bei dem das Förderband aus einem langgestreckten Basisgurt 2 mit einer Unterseite (Laufseite) und einer das Fördergut tragenden Oberseite (Tragseite) besteht. Im Bereich der rechtsseitigen und linksseitigen Begrenzung des Basisgurtes 2 sind an dessen Tragseite jeweils so genannte Fußteile 5, 6 mittels eines Kontaktmittels 11 aufgeklebt. Diese Fußteile 5, 6 haben in dem hier gewählten Ausführungsbeispiel eine Querschnittsgeometrie, bei der zwei Fußteilschenkel senkrecht aufeinander stehen, von denen ein Schenkel auf dem Basisgurt 2 aufliegt und der andere von dessen Oberfläche wegweist. Das Kontaktmittel kann beispielsweise ein Kontaktkleber sein.

Die Fußteile 5, 6 sind derart nebeneinander auf dem Basisgurt 2 angeordnet, dass zwischen diesen jeweils ein Spalt zur senkrechten Aufnahme einer Seitenwand 7 ausgebildet ist. Wie Fig. 1 und Fig. 2 verdeutlichen, haben die Seitenwände 7 ein im wesentlichen rechteckiges Querschnittsprofil. Die Seitenwände 7 liegen auf dem Basisgurt 2 auf.

Vorzugsweise erfolgt die Verbindung der Seitenwände 7 mit den zugeordneten beiden Fußteilen 5, 6 über mechanische Befestigungsmittel 10 wie Schrauben oder Niete, die quer zur Förderrichtung des Basisgurtes 2 durch die Fußteile 5, 6 und die Seitenwände 7 geführt sind (Fig. 2).

Zudem ist der Querschnittsdarstellung gemäß Fig. 2 entnehmbar, dass zumindest die Seitenwände 7, sinnvollerweise aber auch die Fußteile 5, 6 hinsichtlich ihres inneren Aufbaus mit Gewebelagen 12 ausgestattet sind, so dass die Seitenteile 7 sehr gut geeignet sind, um die von einem auf dem Basisgurt 2 befindlichen Fördergut ausgeübten Seitenkräfte abzufangen und in den Basisgurt 2 einzuleiten.

In den Seitenwänden 7 sind zudem Durchführöffnungen 14 eingebracht, durch die so genannte Querbalken 4 geführt sind. Diese auf der Tragseite angeordneten Querbalken 4 sind mit dem Basisgurt 2 fest verbunden, so dass eine von dem zu fördernden Material auf den Basisgurt wirkende Gewichtskraft in die jeweiligen Querbalken 4 eingeleitet werden kann. Zur Weiterleitung dieser Traglast sind an den beiden freien Enden eines jeden Querbalkens 4 Rollen 3 drehbar gelagert, die auf hier nicht dargestellten Tragseilen abrollen. Diese Tragseile sind in an sich bekannter Weise parallel zur Längserstreckung des Förderbandes 1 ausgerichtet und werden von entsprechenden Tragwerken geführt und gehalten.

Wie Fig. 1 in Zusammenschau mit Fig. 3 veranschaulicht, sind gemäß dieses Ausführungsbeispiels in den Seitenwänden 7 Schlitze 8 ausgebildet, die im wesentlichen senkrecht zur Oberfläche des Förderbandes 1 ausgerichtet sind. Diese Schlitze 8 erleichtern insbesondere bei kleinerem Durchmesser einer Umlenktrommel 13 die schadlose Umlenkung der Seitenwände 7 an den beiden Enden der Förderstrecke, da diese Schlitze 8 ein Aufweiten der von der Oberseite des Förderbandes 1 wegweisenden Oberseite der Seitenwände 7 ermöglichen.

Gemäß einer besonderen Weiterbildung der Erfindung ist das geschlossene Ende 9 der Schlitze 8 kreisförmig ausgebildet, so dass durch diese Maßnahme dort auftretende Spannungsspitzen verringert werden und somit wirkungsvoll ein Einreißen der Seitenwand 7 vermieden wird.

### Bezugszeichenliste

- 1: Förderbandabschnitt, Förderband
- 2: Basisgurt
- 3: Rolle
- 4: Querbalken
- 5: Fußteil
- 6: Fußteil
- 7: Seitenwand
- 8: Schlitz
- 9: Kreissegment am Schlitzfuß
- 10: Befestigungsmittel
- 11: Kontaktmittel
- 12: Faser
- 13: Umlenktrommel
- 14: Durchführöffnung

## Patentansprüche

1. Förderband (1) für eine Langstreckenförderanlage, mit einem langgestreckten Basisgurt (2), an dem in Längsrichtung hintereinander angeordnet Querbalken (4) befestigt sind, wobei an den beiden freien Enden eines jedem Querbalkens (4) drehbar gelagerte Rollen (3) befestigt sind, sowie mit zwei rechts- und linksseitig im Bereich der seitlichen Begrenzung des Basisgurtes (2) angeordneten Seitenwänden,
**dadurch gekennzeichnet,**
**dass** die Seitenwände (7) unverwunden auf dem Basisgurt (2) liegen und mit diesem verbunden sind.

2. Förderband nach Anspruch 1, **dadurch gekennzeichnet, dass** in den Seitenwänden (7) Schlitze (8) ausgebildet sind, die senkrecht zur Förderrichtung und zur Quererstreckung des Basisgurtes (2) ausgebildet sind.

3. Förderband nach Anspruch 2, **dadurch gekennzeichnet, dass** das geschlossene Ende (9) der Schlitze (8) kreisförmig ausgebildet ist.

4. Förderband nach Anspruch 2 oder 3, **dadurch gekennzeichnet, dass** die Schlitze (8) einschließlich des kreisförmigen Endes (9) eine Länge von 55% bis 85%, insbesondere von 75% der Seitenwandhöhe aufweisen.

5. Förderband nach wenigstens einem der vorherigen Ansprüche, **dadurch gekennzeichnet, dass** die Seitenwände (7) eine im wesentlichen rechteckige Querschnittsgeometrie sowie eine vergleichsweise plane Oberfläche aufweisen.

6. Förderband nach wenigstens einem der vorherigen Ansprüche, **dadurch gekennzeichnet, dass** die Seitenwände (7) aus einem gummielastischen Material bestehen und eingebettete Verstärkungsfasern oder textile Gewebelagen (12) aufweisen.

7. Förderband nach wenigstens einem der vorherigen Ansprüche, **dadurch gekennzeichnet, dass** die Seitenwände (7) mit dem Basisgurt (2) über Verbindungsmittel verbunden sind.

8. Förderband nach Anspruch 7, **dadurch gekennzeichnet, dass** die Seitenwände (7) mit dem Basisgurt (2) verklebt sind.

9. Förderband nach Anspruch 7, **dadurch gekennzeichnet, dass** die Verbindungsmittel Befestigungsschrauben (10) sind.

10. Förderband nach wenigstens einem der vorherigen Ansprüche, **dadurch gekennzeichnet, dass** die Seitenwände (7) an ihrem basisgurtseitigen Ende jeweils mit wenigstens einem Fußteil (5, 6) verbunden sind, welches seinerseits auf der Tragseite des Basisgurtes (2) befestigt ist.

11. Förderband nach Anspruch 10, **dadurch gekennzeichnet, dass** die Seitenwände (7) jeweils parallel zu ihrer Längserstreckung rechts- und linksseitig mit je einem Fußteil (5, 6) verbunden sind.

12. Förderband nach Anspruch 10 und/oder Anspruch 11, **dadurch gekennzeichnet, dass** die Fußteile (5, 6) mit dem Basisgurt (2) verklebt oder mittels Befestigungsschrauben (10) verbunden sind.

13. Förderband nach wenigstens einem der Ansprüche 10-12, **dadurch gekennzeichnet, dass** die Fußteile (5, 6) als extrudierte Bauteile ausgebildet sind.

14. Förderband nach wenigstens einen der vorherigen Ansprüche, **dadurch gekennzeichnet, dass** die Seitenwände (7) quer zu deren Längserstreckung ausgerichtete Durchführöffnungen (14) zur Aufnahme der Querbalken (4) aufweisen.

15. Förderband nach Anspruch 14 und/oder Anspruch 12, **dadurch gekennzeichnet, dass** die Durchführöffnungen (14) und/oder die Öffnungen zur Aufnahme von Befestigungsschrauben (10) aus den Seitenwänden (7) herausgestanzt oder herausgebohrt sind.

## Claims

1. Conveying belt (1) for a long-distance conveying installation, having an elongate base belt (2) on which are fastened crossmembers (4) which are arranged one behind the other in the longitudinal direction, rotatably mounted rollers (3) being fastened at the two free ends of each crossmember (4), and having two side walls which are arranged on the right and left in the region of the lateral boundary of the base belt (2),
**characterized**
**in that** the side walls (7) lie straight, without being deformed or curved in any way, on the base belt (2) and are connected to the latter.

2. Conveying belt according to Claim 1, **characterized in that** the side walls (7) contain slots (8) which are formed perpendicularly to the conveying direction, and to the transverse extent, of the base belt (2).

3. Conveying belt according to Claim 2, **characterized in that** the closed end (9) of the slots (8) is of circular form.

4. Conveying belt according to Claim 2 or 3, **characterized in that** the slots (8), including the circular end (9), have a length of 55% to 85%, in particular of 75%, of the side-wall height.

5. Conveying belt according to at least one of the preceding claims, **characterized in that** the side walls (7) have an essentially rectangular cross-sectional geometry and a comparatively planar surface.

6. Conveying belt according to at least one of the preceding claims, **characterized in that** the side walls (7) consist of an elastomeric material and contain embedded reinforcement fibres or woven textile layers (12).

7. Conveying belt according to at least one of the preceding claims, **characterized in that** the side walls (7) are connected to the base belt (2) via connecting means.

8. Conveying belt according to Claim 7, **characterized in that** the side walls (7) are adhesively bonded to the base belt (2).

9. Conveying belt according to Claim 7, **characterized in that** the connecting means are fastening screws (10).

10. Conveying belt according to at least one of the preceding claims, **characterized in that**, at their base-belt end, the side walls (7) are each connected to at least one foot part (5, 6) which, for its part, is fastened on the load-bearing side of the base belt (2).

11. Conveying belt according to Claim 10, **characterized in that** the side walls (7) are each connected to a foot part (5, 6) on the right and left parallel to their longitudinal extent in each case.

12. Conveying belt according to Claim 10 and/or Claim 11, **characterized in that** the foot parts (5, 6) are adhesively bonded to the base belt (2) or are connected thereto by means of fastening screws (10).

13. Conveying belt according to at least one of Claims 10-12, **characterized in that** the foot parts (5, 6) are in the form of extruded components.

14. Conveying belt according to at least one of the preceding claims, **characterized in that** the side walls (7) have through-openings (14) which are oriented transversely to the longitudinal extent of the side walls and are intended for accommodating the crossmembers (4).

15. Conveying belt according to Claim 14 and/or Claim 12, **characterized in that** the through-openings (14) and/or the openings for accommodating fastening screws (10) are punched or drilled out of the side walls (7).

## Revendications

1. Bande transporteuse (1) pour une installation de transport sur longue distance qui présente :
une courroie de base (2) allongée sur laquelle sont fixées des poutrelles transversales (4) disposées les unes derrière les autres dans le sens de la longueur,
des galets (3) montés de manière à pouvoir tourner et fixés aux deux extrémités libres de chaque poutrelle transversale (4), et
deux parois latérales disposées à gauche et à droite dans la zone occupée par les frontières latérales de la courroie de base (2),
**caractérisée en ce que**
les parois latérales (7) reposent sur la courroie de base (2) sans déformation et sont reliées à cette dernière.

2. Bande transporteuse selon la revendication 1, **caractérisée en ce que** des fentes (8) qui s'étendent perpendiculairement à la direction du transport et à l'extension transversale de la courroie de base (2) sont formées dans les parois latérales (7).

3. Bande transporteuse selon la revendication 2 **caractérisée en ce que** l'extrémité fermée (9) des fentes (8) est circulaire.

4. Bande transporteuse selon les revendications 2 ou 3, **caractérisée en ce que** les fentes (8) présentent avec leur extrémité circulaire (9) une longueur qui représente de 55 % à 85 % et en particulier 75 % de la hauteur des parois latérales.

5. Bande transporteuse selon au moins l'une des revendications précédentes, **caractérisée en ce que** les parois latérales (7) ont une section transversale de géométrie essentiellement rectangulaire ainsi qu'une surface relativement plane.

6. Bande transporteuse selon au moins l'une des revendications précédentes, **caractérisée en ce que** les parois latérales (7) sont constituées d'un matériau caoutchouteux élastique dans lequel sont incorporées des fibres de renfort ou des couches (12) de tissu textile.

7. Bande transporteuse selon au moins l'une des revendications précédentes, **caractérisée en ce que** les parois latérales (7) sont reliées à la courroie de base (2) par des moyens de liaison.

8. Bande transporteuse selon la revendication 7, **caractérisée en ce que** les parois latérales (7) sont collées sur la courroie de base (2).

9. Bande transporteuse selon la revendication 7, **caractérisée en ce que** les moyens de liaison sont des vis de fixation (10).

10. Bande transporteuse selon au moins l'une des revendications précédentes, **caractérisée en ce que** les parois latérales (7) sont reliées à leur extrémité située du côté de la courroie de base à au moins une pièce de pied (5, 6) qui est elle-même fixée sur le côté porteur de la courroie de base (2).

11. Bande transporteuse selon la revendication 10, **caractérisée en ce que** les parois latérales (7) sont toutes reliées à une partie de pied (5, 6) respective, du côté droit et du côté gauche, parallèlement à leur extension longitudinale.

12. Bande transporteuse selon la revendication 10 et/ou la revendication 11, **caractérisée en ce que** les pièces de pied (5, 6) sont collées à la courroie de base (2) ou y sont reliées au moyen de vis de fixation (10).

13. Bande transporteuse selon au moins l'une des revendications 10 à 12, **caractérisée en ce que** les pièces de pied (5, 6) sont configurées comme composants extrudés.

14. Bande transporteuse selon au moins l'une des revendications précédentes, **caractérisée en ce que** pour loger les poutres transversales (4), les parois latérales (7) présentent des ouvertures de passage (14) orientées transversalement par rapport à leur extension longitudinale.

15. Bande transporteuse selon la revendication 14 et/ou la revendication 12, **caractérisée en ce que** les ouvertures de passage (14) et/ou les ouvertures de reprise des vis de fixation (10) sont estampées ou forées dans les parois latérales (7).
